# EUROPÄISCHE PATENTSCHRIFT

(11) **EP 3 402 655 B1**
(45) Veröffentlichungstag und Bekanntmachung des Hinweises auf die Patenterteilung: **30.12.2020**
(21) Anmeldenummer: 16809662.6
(22) Anmeldetag: 24.11.2016
(51) Int. Cl.: B29C 67/24, B22C 1/00

(54) **FORMGEBUNGSWERKZEUG FÜR SCHMELZFLÜSSIGES METALL ODER GLAS**
MOLDING TOOL FOR MOLTEN METAL OR GLASS
OUTIL DE FORMAGE POUR MÉTAL OU VERRE EN FUSION

(30) Priorität: 24.11.2015 DE 102015223239
(43) Veröffentlichungstag der Anmeldung: 21.11.2018
(73) Patentinhaber: SGL Carbon SE, 65201 Wiesbaden (DE)
(72) Erfinder: ÖTTINGER, Oswin, 86405 Meitingen (DE); RIVOLA, Dominik, 86405 Meitingen (DE); SCHULZE, Sebastian, 86405 Meitingen (DE)
(86) Internationale Anmeldenummer: PCT/EP2016/078744
(87) Internationale Veröffentlichungsnummer: WO 2017/089499

(56) Entgegenhaltungen:
- WO-A1-2015/120429
- WO-A2-02/095080
- WO-A2-02/095080
- WO-A2-02/101103
- CN-A- 104 841 869
- JP-A- H11 244 992
- N.N.: "Broad Base. Best Solutions. Specialty Graphites for the Glass and Refractory Industries GRAPhITE MATERIALS AnD SySTEMS", , 29. Mai 2015 (2015-05-29), XP055337092, Gefunden im Internet: URL:http://www.sglgroup.com/cms/_common/do wnloads/products/product-groups/gs/brochur es/Specialty_Graphites_for_the_Glass_and_R efractory_Industries_e.pdf [gefunden am 2017-01-19]
- DIRK GODLINSKI ET AL: "Steel Parts with Tailored Material Gradients by 3D-Printing Using Nano-Particulate Ink", MATERIALS SCIENCE FORUM, Bd. 492-493, 1. Januar 2005 (2005-01-01), Seiten 679-684, XP055337181, DOI: 10.4028/www.scientific.net/MSF.492-493.679

## Beschreibung

Die vorliegende Erfindung betrifft ein Formgebungswerkzeug aus Kohlenstoff oder Graphit, nämlich eine Gießform oder ein Gießkern für die Verarbeitung von schmelzflüssigem Metall oder ein Formgebungswerkzeug für die Verarbeitung von schmelzflüssigem Glas, wie zum Beispiel eine Blasform. Die vorliegende Erfindung betrifft ebenfalls ein Verfahren zur Herstellung des Formgebungswerkzeugs.

Formgebungswerkzeuge, wie sie in Gießereien zum Einsatz kommen, bestehen typischerweise aus zu einer Form verbundenen Körnern, den sogenannten Formgrundstoffen. Der Begriff "Formgrundstoffe" wird im VDG-Merkblatt R 201 Gießerei-Formstoffe-Begriffe wie folgt definiert: "Formgrundstoff ist Sand, der als Füllstoff den Hauptbestandteil des Formstoffes bildet. Formgrundstoffe haben in der Regel keine Bindemittelfunktion. Sand ist ein Kollektiv von Körnern, vorwiegend in der Kornklasse 0,063 bis 1,50 mm."

Formgebungswerkzeuge für den Metallguss können mit dem 3D-Druckverfahren aus Sand hergestellt werden. Hierbei werden alternierende Schichten von Sand und einem Binder übereinander aufgetragen, sodass ein 3-dimensionaler Lagenaufbau entsteht. Mittels 3D-Druck sind grundsätzlich beliebig komplexe Formen kostengünstig in einem Stück herstellbar. Für die Anwendung als Gießform, Gießkern für die Verarbeitung von schmelzflüssigem Metall sind jedoch gewisse Stabilitäts- und Festigkeitsanforderungen an das Material gestellt. 3D gedruckte Formgebungswerkzeuge aus Sand erfüllen diese Anforderungen grundsätzlich.

Neben Quarzsand gibt es eine Vielzahl an Spezialsanden die als Formgrundstoff verwendet werden, um den verschiedenen Anforderungen an die Qualität des Gusses gerecht werden zu können.

Eine der Hauptursachen für Gussfehler besteht in der Formausdehnung, welche durch starkes thermisches Ausdehnungsverhalten des Sandes ausgelöst wird. Dies führt u.a. zu erhöhten Aufwand in der Nachbearbeitung von Gussteilen, wenn nicht gleich zu Ausschuss. Zur Verringerung dieser Gussfehler wurden Spezialsande - wie Zirkonsand - entwickelt, welche jedoch sehr hochpreisig sind.

Eine weitere Ursache für die negative Beeinflussung der Gussqualität ist die für Sande typische geringe Wärmeleitfähigkeit, zum Beispiel Quarzglas: 1,36 W/(m^{∗}K) bei Raumtemperatur (siehe Kuchling, "Taschenbuch der Physik", Harri Deutsch Verlag, 1991); Formwerkstoff aus Sand typischerweise < 0,2 W/(m^{∗}K) bei Raumtemperatur (siehe Recknagel et al. "Spezialsande - Formgrundstoffe für die moderne Kern- und Formherstellung", Broschüre von *Hüttenes-Albertus chemische Werke GmbH,* veröffentlicht 2008). Hierdurch kühlt der Metallguss eher langsam ab, wodurch grundsätzlich ein gröberes Gefüge im Metall erzeugt wird. Ein schnelleres Abkühlen von Metall resultiert dagegen in einem feineren Gefüge mit kleinen Dendriten und kleinen Korngrößen der unterschiedlichen Phasen im Metall, was letztlich zu einer höheren Festigkeit des Gussbauteils führt.

Ein weiterer Nachteil ist die für Sande typische, hohe Schüttdichte von meist größer als 1,5 g/cm³ (siehe Tilch et al. "Einfluss alternativer Formgrundstoffe auf die Eigenschaften von Formstoff und Gussteil", Giesserei 93, 08/2006, Seiten 12-24). Eine hohe Schüttdichte ist insbesondere nachteilig für Gießkerne, da diese im Inneren einer Form fixiert und in Position gehalten werden müssen. Leichtere Gießkerne sind daher vorteilhaft.

Ein hinsichtlich der oben genannten materialbedingten Nachteile besseres Material gegenüber Sand, stellt Kohlenstoff oder Graphit dar. Diese Materialien besitzen eine geringere Wärmeausdehnung, eine höhere Wärmeleitfähigkeit (zum Beispiel Graphit: 169 W/(m^{∗}K) bei Raumtemperatur (siehe Kuchling, "Taschenbuch der Physik", Harri Deutsch Verlag, 1991) und eine geringere Schüttdichte als Sande. Gießformen aus Kohlenstoff sind beispielsweise in der GB799331A beschrieben. Derartige Formen werden hergestellt, indem eine Mischung aus Kokspartikeln und Binderharz in ein Presswerkzeug gegeben und dadurch verdichtet wird. Mit dieser Methode sind jedoch komplexe Formen, die beispielsweise Hinterschnitte oder Hohlräume aufweisen nicht ohne weiteres herstellbar. Diese müssen durch Fügen einzelner Formbausteine erzeugt werden. Dadurch entstehen mehrteilige Gießformen und es besteht die Problematik der präzisen Fügung und Positionierung der Formbausteine. Des Weiteren führt die Formgebung durch Verdichten häufig zu einer Anisotropie des Wärmeausdehnungsverhaltens, da üblicherweise der Verdichtungsdruck nur in eine Richtung wirkt und sich die Partikel in der Mischung dadurch in ihrer Orientierung ausrichten.

Vor diesem Hintergrund offenbart "Broad Base. Best Solutions. Specialty Graphites for the Glass and Refractory Industries GRAPHITE MATERIALS AND SYSTEMS" (29. Mai 201) ein Formgebungswerkzeug aus einem Spezialgraphit, welches zumindest einen Hohlraum umfasst und von homogener Struktur ist.

WO 2015/120429 A1 (HARVARD COLLEGE [US], 13. August 2015) betrifft ein 3D-Druckverfahren für ein kohlenstoffhaltiges Kompositmaterial.

Die Aufgabe der vorliegenden Erfindung besteht daher darin, ein Formgebungswerkzeug bereitzustellen, welches einfach und kostengünstig herzustellen ist, das beliebig komplexe Geometrie annehmen kann und dabei ein homogenes Gefüge aufweist, das verbesserte Materialeigenschaften gegenüber Sanden aufweist und dabei gleichzeitig von vergleichbarer Stabilität und Festigkeit ist, damit es für den Einsatz als Gießform oder Gießkern für die Verarbeitung von schmelzflüssigem Metall oder als Formgebungswerkzeug für die Verarbeitung von schmelzflüssigem Glas, wie zum Beispiel eine Blasform, geeignet ist.

Die Aufgabe wird gelöst durch ein Formgebungswerkzeug für schmelzflüssiges Metall oder Glas, das Partikel enthält, wobei mindestens 50 Gew.-% der Partikel aus Kohlenstoffpartikeln bestehen, wobei die Partikel mit einem Binder miteinander verbunden sind, wobei das Formgebungswerkzeug zu mindestens 90 Gew.-% aus den Partikeln besteht, wobei das Formgebungswerkzeug eine geometrische Dichte von 0,7 g/cm³ bis 1,4 g/cm³ aufweist, und wobei das Formgebungswerkzeug einen Anisotropiefaktor hinsichtlich der thermischen Ausdehnung von weniger als 1,2 aufweist.

Ein Vorteil gegenüber Formgebungswerkzeugen aus Sand ist, dass Kohlenstoff elektrisch leitfähig ist und dadurch das erfindungsgemäße Formgebungswerkzeug unmittelbar vor der Formgebung durch Widerstandsheizung oder induktiv beheizt werden kann und dies mit einer besonders homogenen Temperaturverteilung.

Ein weiterer Vorteil gegenüber Formgebungswerkzeugen aus Sand ist, dass insbesondere Gießkerne nach dem Guss für die Entformung ausgebrannt werden können.

Weiterhin eignet sich das erfindungsgemäße Formgebungswerkzeug aufgrund seiner Porosität insbesondere für das Glasblasen. Die entsprechenden Formgebungswerkzeuge werden üblicherweise vor dem Glasblasen mit Wasser befeuchtet oder bedampft, sodass sich ein Dampffilm zwischen dem Glas und dem Formgebungswerkzeug bildet. Die Oberfläche des Formgebungswerkzeugs tritt dabei nach Möglichkeit nicht in direkten Kontakt mit dem Glas. Hierfür ist eine hohe und homogene Porosität erforderlich. Diese bietet das erfindungsgemäße Formgebungswerkzeug.

Im Rahmen der vorliegenden Erfindung wurde gefunden, dass für die Anwendungen als Gießformen, Gießkerne und Formgebungswerkzeuge für die Verarbeitung von schmelzflüssigem Glas, wie zum Beispiel Blasformen, mittels des 3D-Druckverfahrens ausreichend stabile Formgebungswerkzeuge aus Kohlenstoff erhalten werden können. Das erfindungsgemäße Formgebungswerkzeug unterscheidet sich von bekannten Gießformen aus Koks hinsichtlich seiner hohen Isotropie, was vermutlich durch die Herstellungsweise bedingt ist. Ein Anisotropiefaktor von weniger als 1,2 bedeutet dabei im Rahmen der vorliegenden Erfindung, dass sich die thermischen Ausdehnungskoeffizienten in allen drei Raumrichtungen (x-, y- und z- Richtung) jeweils um nicht mehr als 20 % voneinander unterscheiden. Bevorzugt beträgt der Anisotropiefaktor weniger als 1,1, weiter bevorzugt weniger als 1,05. Gemäß dem in Beispiel 2 nachfolgend beschriebenen konkreten Ausführungsbeispiel können sogar Anisotropiefaktoren von weniger als 1,02 erhalten werden. Diese hohe Isotropie in der thermischen Ausdehnung führt in vorteilhafter Weise zu einer verbesserten Formgenauigkeit der Gussteile.

Der Einfachheit halber sind im Rahmen der vorliegenden Erfindung unter dem Begriff "Gussteile" auch die entsprechenden Glas-Produkte zu verstehen, die mit dem Formgebungswerkzeug der vorliegenden Erfindung hergestellt werden. Der Begriff "Gussteil" ist daher nicht einschränkend nur auf den Metallguss bezogen zu verstehen. Dementsprechend ist unter dem Begriff Formgebungswerkzeug im Rahmen der vorliegenden Erfindung entweder eine Gießform oder ein Gießkern für den Metallguss oder Glasguss, sowie eine Blasform für das Glasblasen zu verstehen.

Erfindungsgemäß bestehen mindestens 50 Gew.-% der Partikel im Formgebungswerkzeug aus Kohlenstoffpartikeln. Aus Gründen der homogeneren Eigenschaften und der Recyclingfähigkeit bestehen jedoch bevorzugt mindestens 90 Gew.-% der Partikel im Formgebungswerkzeug aus Kohlenstoffpartikeln und am meisten bevorzugt werden sortenreine Partikel verwendet.

Bevorzugt weist das Formgebungswerkzeug eine komplexe Geometrie umfassend Hinterschnitte oder Hohlräume auf und ist dabei von homogener Struktur. Homogene Struktur bedeutet im Rahmen der vorliegenden Erfindung, dass Stoßstellen oder Fügestellen im Formgebungswerkzeug vermieden werden. Sollte es beim Entformen einer Gießform von gegossenen Bauteilen notwendig sein, mit geteilten, also aus mehreren Teilen zusammengefügten Formen zu arbeiten, so sind diese auch von der vorliegenden Erfindung umfasst.

Die verwendeten Kohlenstoffpartikel sind nicht besonders eingeschränkt. Sie umfassen amorphen Kohlenstoff und Graphit sowie sämtliche Mischformen dieser. Bevorzugt umfassen die Kohlenstoffpartikel Acetylenkoks, Flexikoks, Fluidkoks, Shot Coke, Steinkohlenteerpechkoks, Rußkoks, synthetischer Graphit, Kugelgraphit, mikrokristalliner Naturgraphit, Anthrazite oder ein Granulat von Koks, wobei sie weiter bevorzugt aus diesen oder deren Mischung bestehen, da das entsprechende Formgebungswerkzeug eine besonders hohe Wärmeleitfähigkeit besitzt. Demgegenüber sind weniger bevorzugt makrokristalliner Naturgraphit (Flockengraphit) und Kohlenstoffe und Graphite auf Basis von Nadelkoksen, da diese Werkstoffe meist in einer für das 3D-Drucken ungünstigen Partikelform vorliegen. Alle Kokssorten können als Grünkoks, carbonisiert oder graphitiert, d.h. hochtemperaturbehandelt bei über 500°C, beziehungsweise über 2000°C, vorliegen. Entsprechendes gilt für Anthrazite. Bevorzugt liegen die Kokssorten jedoch als carbonisierter oder graphitierter Koks vor, da diese weniger Volatile enthalten und eine niedrige thermische Ausdehnung besitzen. Die genannten bevorzugten Kokssorten sind deshalb vorteilhaft, weil deren Partikel hinsichtlich des Formfaktors (Partikelbreite/Partikellänge) annähernd kugelförmig, also rund sind. Dies führt zu einer verbesserten Verarbeitbarkeit im 3D-Druck, sowie zu homogeneren und isotroperen Eigenschaften der 3D-gedruckten Formgebungswerkzeuge.

Besonders bevorzugt sind Steinkohlenteerpechkokse und synthetische Feinkorngraphite, da diese besonders isotrope Eigenschaften, beispielsweise hinsichtlich des Wärmeausdehnungskoeffizienten, aufweisen. Steinkohlenteerpechkoks wird folgendermaßen hergestellt: Bei der Herstellung von metallurgischen Koks aus Steinkohle wird als Beiprodukt Steinkohlenteer erzeugt. Dieser wird einer Destillation unterworfen und der Rückstand wird erneut verkokt. Der daraus erhaltene Pechkoks wird schließlich gemahlen.

Besonders bevorzugt sind weiterhin Acetylenkoks, Flexikoks, Fluidkoks und Shot Coke, da diese gegenüber Graphit, aufgrund ihrer größeren Härte, verschleißstabiler sind. Dies hat Vorteile beispielsweise beim Recyceln der Partikel, nachdem das erfindungsgemäße Formgebungswerkzeug zum Einsatz gekommen ist. Insbesondere Gießkerne sind nur für den einmaligen Gebrauch geeignet, da sie, um von dem Gussteil getrennt werden zu können, zerstört werden müssen, beispielsweise, indem die Partikel mechanisch entfernt werden. Diese Kokssorten sind darüber hinaus deshalb vorteilhaft, weil deren Partikel eine annähernd kugelförmige Gestalt aufweisen, also rund sind. Dies führt zu einer noch weiter verbesserten Verarbeitbarkeit im 3D-Druck, sowie zu homogeneren und isotroperen Eigenschaften der 3D-gedruckten Formgebungswerkzeuge. Am meisten bevorzugt ist diesbezüglich Acetylenkoks, da er wenige Verunreinigungen aufweist und eine besonders sphärische Gestalt besitzt. Acetylenkoks ist weiterhin deshalb am meisten bevorzugt, da diese Kokssorte besonders rein ist. Der Aschewert liegt bei ca. 0,01% und die metallischen Verunreinigungen wie zum Beispiel für Na, Ni, Fe und V liegen typischerweise durchweg weit unter 50 ppm. Flexikoks hingegen hat einen Aschewert im Bereich 1%. Oben genannte metallische Verunreinigungen liegen im Bereich von mehreren 100 ppm bis hin zu mehr als1000ppm. Viele dieser Verunreinigung können katalytisch auf das Oxidationsverhalten des Kolenstoffmaterials wirken. Verunreinigungen wie z.B.

Nickeloxide in stark verunreinigten Koksen mit Gehalten grösser 0,1% sind sogar als krebserzeugend nach Kat 1A einzustufen, wodurch die Handhabbarkeit sowie Verarbeitbarkeit als auch die Verwendung von stark verunreinigten Koksen erheblich eingeschränkt wird. Darüber hinaus weisen die erfindungsgemäßen Formgebungswerkzeuge aus Acetylenkoks eine besonders hohe Gründichte und eine höhere Bruchfestigkeit auf, als die aus z.B. Flexikoks. Letzteres hat vermutlich in der zwiebelschalenartigen Struktur des Acetylenkokses seine Ursache. Die erfindungsgemäß am meisten bevorzugte Ausführungsform stellt daher ein erfindungsgemäßes Formgebungswerkzeug dar, in welchem die darin enthaltenen Kohlenstoffpartikel Acetylenkoks umfassen oder, bevorzugt, aus Acetylenkoks bestehen.

Fluidkoks und Flexikoks basieren auf der Rohölverarbeitung. Nach der Atmosphären- und Vakuumdestillation von Rohöl wird der Rückstand mit dem sogenannten Fluid Coking bzw. Flexi Coking verkokt, wobei beides charakteristischerweise in einem kontinuierlichen Wirbelbett stattfindet, was zu weitgehend kugelförmigen Partikeln führt. Acetylenkoks fällt als Abfallprodukt, zunächst grün, d.h. flüchtige Bestandteile enthaltend, in der Acetylenherstellung an, welche beispielsweise in der DE 29 47 005 A1 beschrieben ist. Shot Coke ist eine isotrope Kokssorte dessen Partikel zu einer sphärischen Form neigen und teils zwiebelschalenartig aufgebaut sind (siehe: Paul J. Ellis, "Shot Coke", Light Metals, 1996, Seiten 477-484).

Rußkoks wird hergestellt, indem eine Mischung aus Ruß und Pech verkokt wird und anschließend gemahlen wird. Da die Rußpartikel selbst sehr klein sind, in der Regel im Nanometerbereich, erhalten gemahlene Rußkokspartikel automatisch eine annähernd runde Geometrie mit isotropen Eigenschaften.

Wird synthetischer Graphit verwendet, so ist Feinkorngraphit aufgrund seiner geringen Anisotropie bevorzugt. In ähnlicher Weise wie beim Rußkoks erhalten die Partikel von gemahlenem Feinkorngraphit ebenfalls automatisch eine annähernd runde Geometrie.

Kugelgraphit basiert auf Naturgraphit und stellt ein Granulat von Naturgraphitflocken mit einem Binder dar. Dieser besitzt ebenfalls eine annähernd kugelförmige Geometrie. Kugelgraphit ist insbesondere dann bevorzugt, wenn das Formgebungswerkzeug eine besonders hohe Wärmeleitfähigkeit besitzen soll.

Unter einem Granulat von Koks sind Granulate von allen möglichen Kokssorten mit einem polymeren Binder zu verstehen. Granulate sind deshalb bevorzugt, weil durch die Granulation ebenfalls Partikel mit annähernd runder Geometrie erhalten werden.

Im Rahmen der Erfindung ist es möglich, dass der Koks mit einem flüssigen Aktivator wie beispielsweise einem flüssigen schwefelsauren Aktivator versetzt wird. Durch die Verwendung eines Aktivators kann einerseits die Aushärtungszeit und die notwendige Temperatur für das Aushärten des Binders reduziert werden, andererseits wird die Staubentwicklung der pulverförmigen Zusammensetzung reduziert. Vorteilhafterweise beträgt die Menge an Aktivator 0,05 Gew.-% bis 3 Gew.-%, bevorzugter 0,1 Gew.-% bis 1 Gew.-%, bezogen auf das Gesamtgewicht von Koks und Aktivator. Werden mehr als 3 Gew.-% bezogen auf das Gesamtgewicht von Aktivator und Koks verwendet, so verklebt die pulverförmige Zusammensetzung und die Rieselfähigkeit wird reduziert; werden weniger als 0,05 Gew.-% bezogen auf das Gesamtgewicht von Koks und Aktivator, so ist die Menge an Aktivator, welche mit dem Binder reagieren kann, zu gering, um die gewünschten obigen Vorteile zu erreichen.

Erfindungsgemäß weist das Formgebungswerkzeug eine geringe geometrische Dichte von 0,7 g/cm³ bis 1,4 g/cm³, bevorzugt von 0,8 g/cm³ bis 1,2 g/cm³ auf. Damit kann ein verglichen mit den Formgebungswerkzeugen des Standes der Technik leichteres Material erhalten werden, was darüber hinaus zu einer geringeren Wärmekapazität führt. Dadurch wird weniger Energie benötigt, um das Formgebungswerkzeug vorzuheizen. Weiterhin ist beim Entformen mittels Ausbrennen ein weniger dichtes Material vorteilhaft, da dies schneller von Statten geht.

Bevorzugt weist der zahlenmäßige Großteil der Partikel im erfindungsgemäßen Formgebungswerkzeug eine überwiegend sphärische Gestalt auf. Das bedeutet, dass mindestens 50%, besonders bevorzugt über 70% und noch weiter bevorzugt über 90% der Partikel eine überwiegend sphärische Gestalt aufweisen. Unter einer überwiegend sphärischen Gestalt ist zu verstehen, dass der Großteil (über 50%) der Oberfläche eines Partikels stetig sphärisch gewölbt ist, das heißt keine Bruchkanten oder Spitzen aufweist. Dies ist für eine bessere Handhabung beim 3D-Druck vorteilhaft.

Gemäß einer bevorzugten Ausführungsform der vorliegenden Erfindung weisen die Partikel im Korngrößenbereich des d50-Wertes im Mittel einen Formfaktor (Partikelbreite/Partikellänge) von mindestens 0,5, bevorzugt mindestens 0,6, weiter bevorzugt mindestens 0,7 und am meisten bevorzugt mindestens 0,8 aufweisen. Unter dem Formfaktor wird das Verhältnis aus Partikelbreite zu Partikellänge verstanden. Unter dem Korngrößenbereich des d50-Wertes der Bereich von d50 +/- 10 % zu verstehen. Der Formfaktor ist ein Maß für die Rundheit der Partikel. Wie weiter oben bereits erläutert, zeichnen sich rundere Partikel in einer sichtbar besseren Handhabung beim 3D-Druck aus. Dies betrifft beispielsweise die Rieselfähigkeit. Zudem kann mit annähernd runden Partikeln eine dichtere Kugelpackung im Formgebungswerkzeug erhalten werden, was letztlich zu einer höheren Stabilität und Festigkeit des Formgebungswerkzeugs führt. Der Formfaktor wurde gemäß ISO 13322-2 mit Hilfe eines sogenannten Camsizer-Geräts der Firma Retsch Technology bestimmt. Hierbei werden mit Hilfe einer Kamera und einem Bildanalysesystem die Partikel hinsichtlich Ihrer Breite und Länge bestimmt und ins Verhältnis gesetzt. Bei besonders feinem Pulver kann der Formfaktor anhand von Schliffbildern mit zugehöriger Bildanalyse alternativ ermittelt werden. Der Vorteil von nahezu runden Partikeln besteht im sicheren 3D-Drucken, störungsfreien Pulverauftrag und der geringeren Tendenz zur Rissindizierung bei thermomechanischer Beanspruchung. Darüber hinaus wurde gefunden, dass auch die Brucharbeit und die Bruchdehnung der entsprechenden Bauteile verbessert, d.h. erhöht wird, je runder die Partikel sind.

Gemäß einer bevorzugten Ausführungsform der vorliegenden Erfindung weisen die Partikel eine Korngröße (d99) von kleiner 1 mm, bevorzugt kleiner 0,6 mm auf. Gröberer Koks ist mit dem 3D-Druck schwer zu verarbeiten. Der Begriff "d99" bedeutet, dass 99 % der Partikel kleiner sind als der angegebene Wert. Der d99-Wert wurde unter Zuhilfenahme der lasergranulometrischen Methode bestimmt (ISO 13320), wobei ein Messgerät der Firma Sympatec GmbH mit zugehöriger Auswertesoftware verwendet wurde. Weiter erhält man bei gröberen Partikeln eine zu grobe Oberfläche im späteren Gussbauteil, beziehungsweise Formgebungswerkzeug zu dem zu formenden Metall oder Glas. Bei Verwendung der bevorzugten Kokssorten Acetylenkoks, Flexikoks, Fluidkoks und Shot Coke, welche bereits von Haus aus eine nahezu runde Geometrie aufweisen, werden die Korngrößen größer 1 mm durch Sieben entfernt, anstatt den Koks auf eine gewünschte Größe zu mahlen. So kann die ursprüngliche Rundheit der Partikel erhalten bleiben. Weiterhin führt dies zu einem homogeneren Formgebungswerkzeug, da darin keine groben Körner enthalten sind. Schließlich resultiert dies auch in einer feineren und homogeneren Poren- und Oberflächenstruktur des Formgebungswerkzeugs und damit zu einer verbesserten Oberflächengüte des Gussteils, das heißt zu einer glatteren Oberfläche. Dies stellt einen weiteren Vorteil gegenüber den bekannten Gießformen aus Kohlenstoff, die beispielsweise nach der Lehre der GB799331A hergestellt werden, dar.

Der Binder im erfindungsgemäßen Formwerkzeug ist nicht besonders eingeschränkt. Mögliche Binder enthalten Phenolharz, Furanharz, Zellulose, Stärke, Zucker oder Silikate, insbesondere Wasserglas umfasst. Bevorzugt umfasst der Binder jedoch ausgehärtetes Phenolharz, ausgehärtetes Furanharz oder Wasserglas, da die entsprechenden Formgebungswerkzeuge eine besonders hohe Festigkeit und Stabilität aufweisen.

Gemäß einer bevorzugten Ausführungsform der vorliegenden Erfindung besteht der Binder aus Kohlenstoff und stellt so zusammen mit den Kohlenstoffpartikeln im Formgebungswerkzeug ein durchgängiges und stoffschlüssig verbundenes Kohlenstoff-Netzwerk dar. Diese Ausführungsform ist insbesondere dann vorteilhaft, wenn Ausgasungen vermieden werden sollen, die ansonsten durch die Zersetzung des Binders, aufgrund der hohen Temperaturen bei der Formgebung von Metall oder Glas, entstehen.

Gemäß einer bevorzugten Ausführungsform der vorliegenden Erfindung beträgt der Anteil des Binders im Formgebungswerkzeug 1 bis 10 Gew.-%, weiter bevorzugt 2 bis 8 Gew.-% und am meisten bevorzugt 3 bis 5 Gew.-%, bezogen auf das Gesamtgewicht des Formgebungswerkzeugs, abgesehen jedoch von einer etwa vorhandenen Schlichte, wie weiter unten beschrieben. In diesem Zusammenhang ist auch der erfindungsgemäße Anteil der Partikel im Formgebungswerkzeug von mindestens 90 Gew.-% zu verstehen. Diese Anteilsangaben beziehen sich nur auf das Gesamtgewicht von Binder und Partikel. In Bezug auf die Ausführungsform, wonach der Binder aus Kohlenstoff besteht, ist der bevorzugte Binderanteil im Formgebungswerkzeug sogar noch geringer, und zwar 1 bis 6 Gew.-%, weiter bevorzugt 1 bis 4 Gew.-% und am meisten bevorzugt 1 bis 3 Gew.-%, bezogen auf das Gesamtgewicht von Binder und Partikel.

Gemäß einer bevorzugten Ausführungsform der vorliegenden Erfindung weist das Formgebungswerkzeug einen Wärmeausdehnungskoeffizienten, gemessen zwischen Raumtemperatur und 150°C, von weniger als 8 µm/(m^{∗}K) aufweist. In Bezug auf die Ausführungsform, wonach der Binder aus Kohlenstoff besteht, lassen sich noch geringere Wärmeausdehnungskoeffizienten erreichen, und zwar bevorzugt weniger als. 5 µm/(m^{∗}K), weiter bevorzugt weniger als 4 µm/(m^{∗}K). Unter Raumtemperatur wird im Rahmen der vorliegenden Erfindung 25°C verstanden. Die Messung des Wärmeausdehnungskoeffizienten erfolgt in Anlehnung an DIN 51909.Bevorzugt weist das Formgebungswerkzeug eine thermische Leitfähigkeit bei Raumtemperatur von mindestens 0,3 W/(m^{∗}K), bevorzugt mindestens 0,5 W/(m^{∗}K) auf, wobei die Messung in Anlehnung an DIN 51908 erfolgte. Eine geringere Wärmeleitfähigkeit führt zu längeren Abkühlzeiten des Gussteils und dadurch, wie oben beschrieben, zu einem gröberen Gussgefüge und weniger stabilen Gussteilen.

Das erfindungsgemäße Formgebungswerkzeug kann auf seiner Oberfläche die in der Gießerei, je nach dem zu verarbeitenden Metall, oder in der Glasbearbeitung üblichen Schlichten oder Trennhilfsmittel aufweisen, wie beispielsweise auf Basis von Al₂O₃. Alternativ können Oberflächenbeschichtungen von Pyrokohlenstoff oder SiC mittels Gasphasenabscheidung aufgebracht werden. Bevorzugt weist das erfindungsgemäße Formgebungswerkzeug jedoch keine zusätzliche Schlichte, kein Trennhilfsmittel und keine Beschichtung auf der Oberfläche des Formgebungswerkzeugs auf, denn Kohlenstoff und Graphit besitzt intrinsisch im Vergleich zu Sand ein geringeres Benetzungserhalten gegenüber den meisten Metallschmelzen. Daher sind Trennmittel und dergleichen meist nicht erforderlich.

Ein weiterer Aspekt der vorliegenden Erfindung betrifft ein Verfahren zur Herstellung eines Formgebungswerkzeugs für schmelzflüssiges Metall oder Glas umfassend die folgenden Schritte:
a) Bereitstellen einer pulverförmigen Zusammensetzung, welche zu mindestens 50 Gew.-% aus Kohlenstoffpartikeln besteht,
b) Bereitstellen eines flüssigen Binders,
c) flächiges Ablegen einer Lage aus dem in a) bereitgestellten Material und lokales Ablegen von Tröpfchen des in b) bereitgestellten Materials auf diese Lage und beliebig häufiges Wiederholen dieses Schrittes c), wobei das lokale Ablegen der Tröpfchen in den jeweils nachfolgenden Wiederholungen dieses Schrittes c) entsprechend der gewünschten Form des herzustellenden Formgebungswerkzeugs angepasst wird,
d) Aushärten oder Trocknen des Binders und Erhalt des Formgebungswerkzeugs.

Unter beliebig häufigem Wiederholen ist zu verstehen, dass das flächige Ablegen einer Lage aus dem in a) bereitgestellten Material und das lokales Ablegen von Tröpfchen des in b) bereitgestellten Materials auf diese Lage so oft wie gewünscht wiederholt wird.

Unter dem Erhalt des Formgebungswerkzeugs im Rahmen der vorliegenden Erfindung ist Folgendes zu verstehen. Unmittelbar nach dem Aushärten oder Trocknen des Binders ist das Formgebungswerkzeugs noch von einer Pulverschüttung aus losen Partikeln der pulverförmigen Zusammensetzung umgeben. Das Formgebungswerkzeug muss daher aus der Pulverschüttung entnommen bzw. von den losen, nicht-verfestigten Partikeln abgetrennt werden. Dies wird in der Literatur zu 3D-Druck auch als "Entpacken" des gedruckten Bauteils bezeichnet. An das Entpacken des Formgebungswerkzeugs kann sich eine (Fein-)Reinigung desselben anschließen, um anhaftende Partikelreste zu entfernen. Das Entpacken kann z. B. durch Absaugen von den losen Partikeln mit einem leistungsstarken Sauger erfolgen. Die Art des Entpackens ist jedoch nicht besonders eingeschränkt und es können sämtliche bekannten Methoden angewandt werden.

Das zuvor beschriebene erfindungsgemäße Formgebungswerkzeug kann durch das erfindungsgemäße Verfahren erhalten werden. Alle in Bezug auf das erfindungsgemäße Formgebungswerkzeug genannten Definitionen und Ausgestaltungen gelten daher in entsprechender Weise auch für das erfindungsgemäße Verfahren, beziehungsweise für die in dem Verfahren verwendeten Materialien.

Gemäß einer bevorzugten Ausführungsform der vorliegenden Erfindung wird das Formgebungswerkzeug einer Temperaturbehandlung von mindestens 500°C unterzogen. Hierdurch werden die Volatile im Binder vertrieben, was Vorteile in der Anwendung des erfindungsgemäßen Formgebungswerkzeugs hat. Diese Temperaturbehandlung wird auch als Carbonisierung bezeichnet. Gemäß einer weiter bevorzugten Ausführungsform der vorliegenden Erfindung wird das Formgebungswerkzeug eine Temperaturbehandlung von mindestens 2000°C, bevorzugt mindestens 2400°C unterzogen wird. Durch diese Temperaturerhöhung wird die Wärmeleitfähigkeit weiter erhöht, da das Formgebungswerkzeug ein graphitiertes, beziehungsweise graphitisches Gefüge aufweist. Diese Temperaturbehandlung wird auch als Graphitierung bezeichnet. Carbonisierung und Graphitierung können separat oder in einem Schritt erfolgen.

Gemäß einer bevorzugten Ausführungsform der vorliegenden Erfindung wird das Formgebungswerkzeug ein- oder mehrmalig einer Nachverdichtung unterzogen, umfassend die folgenden Schritte:
- Imprägnieren mit einem Kohlenstofflieferanten und
- Carbonisieren bei einer Temperatur zwischen 500°C und 1300°C.

Durch diese Nachverdichtung wird der Binder erstens in Kohlenstoff umgewandelt und zweitens wird der Binderanteil erhöht, was zu einem stabileren Formgebungswerkzeug führt. Der Kohlenstofflieferant kann eine Kohlenstoff enthaltende Flüssigkeit, wie beispielsweise ein Polymer wie Phenol- oder Furanharz oder Pech sein. Es ist jedoch auch möglich, dass die Nachverdichtung mittels Gasphaseninfiltration (Chemical Vapor Infiltration (CVI)) durchgeführt wird. Hierbei laufen beide Nachverdichtungsschritte in situ, das heißt in einem Schritt, ab, da als Kohlenstofflieferant ein Kohlenwasserstoffgas verwendet wird und die Gasphasenabscheidung typischerweise bei etwa 700°C bis 1300°C abläuft.

Die erfindungsgemäße pulverförmige Zusammensetzung besteht aus den Partikeln wie sie im Zusammenhang mit dem erfindungsgemäßen Formgebungswerkzeug beschrieben sind. Sämtliche hierzu genannten Ausführungsformen und Vorteile sind daher auch auf die erfindungsgemäße pulverförmige Zusammensetzung anwendbar. Gleiches gilt in entsprechender Weise für den flüssigen Binder in Schritt b). Dieser ist Ausgangsstoff für den Binder gemäß dem erfindungsgemäßen Formgebungswerkzeug. Bevorzugt umfasst der flüssige Binder in Schritt b) Phenolharz, Furanharz, Wasserglas oder Mischungen daraus. Diese können auch als Lösungen vorliegen.

Ein weiterer Aspekt der vorliegenden Erfindung betrifft ein Formgebungswerkzeug, das nach dem erfindungsgemäßen Verfahren erhältlich ist. Durch die Herstellungsweise des Formgebungswerkzeugs, insbesondere dem 3D-Druck, können die weiter oben beschriebenen vorteilhaften Eigenschaften bei Formwerkzeugen erstmals erreicht werden.

Im Folgenden wird die vorliegende Erfindung anhand von Beispielen illustriert.

### Beispiel 1

Kalzinierter Steinkohlenteerpechkoks wurde gemahlen und hatte nach dem Mahlen und Schutzsieben mit einer Siebgröße von 0,4 mm eine Korngrößenverteilung von d10 = 130 µm, d50 = 230 µm und d99 = 500 µm und einen mittleren Formfaktor von 0,69 (im Korngrößenbereich von d50 +/- 10%). Die Korngrößenverteilung wurde mittels Lasergranulometrie bestimmt. Der Koks wird zunächst mit 1 Gew.-% eines schwefelsauren flüssigen Aktivators für Phenolharz, bezogen auf das Gesamtgewicht von Koks und Aktivator, versetzt und mit einer 3D-Druck Pulverbettmaschine verarbeitet. Eine Rackeleinheit legt dabei auf ein ebenes Pulverbett eine dünne Kokspulverlage (ca. 0,3 mm Höhe) ab und eine Art Tintenstrahldruckeinheit druckt eine alkoholische Phenolharzlösung entsprechend der gewünschten Bauteilgeometrie auf das Koksbett. Im Anschluss daran wird der Drucktisch um die Lagenstärke abgesenkt und erneut eine Lage Koks aufgetragen und erneut Phenolharz lokal aufgedruckt. Durch die wiederholte Vorgehensweise wurden dabei quaderförmige Prüfkörper mit den Abmessungen 172 mm (Länge) x 22 mm (Breite) x 22 mm (Höhe) aufgebaut. Ist das komplette "Bauteil" gedruckt, wird das Pulverbett in einen auf 140 °C vorgewärmten Ofen eingebracht und dort ca. 6 Stunden gehalten. Dabei härtet das Phenolharz aus und bildet ein formstabiles Bauteil. Das überschüssige Kokspulver wird nach der Abkühlung abgesaugt und das Bauteil wird entnommen.

Die Dichte des Bauteils beträgt nach der Aushärtung des Binders 0,83 g/cm³ Beispiel (1.1). Die Dichte wurde geometrisch (durch Wiegen und Bestimmung der Geometrie) bestimmt. Das Bauteil hatte einen Harzanteil von 5 Gew.-%, welcher durch eine Carbonisierungsbehandlung bestimmt wurde. Dabei wurde so vorgegangen, dass die Kohlenstoff-Ausbeute der verwendeten ausgehärteten Harzkomponente vorab mittels einer thermogravimetrischen Analyse (TGA) unter Ausschluss von Sauerstoff auf 58 Gew.-% bestimmt wurde. Durch den Massenverlust des Bauteils nach der anschließenden Carbonisierung bei 900 °C unter Schutzgasatmosphäre 1 Stunde lang, konnte dann der ursprüngliche Harzanteil im Bauteil errechnet werden.

Anschließend wurde das carbonisierte Bauteil einer Phenolharzimprägnierung unterzogen und erneut bei 900 °C carbonisiert. Die Dichte wurde dadurch auf 1,08 g/cm³ erhöht. Diese Vorgehensweise wird im Rahmen der vorliegenden Erfindung als Nachverdichtung bezeichnet und wird im Folgenden als Beispiel 1.2 geführt.

Eine Auswahl der carbonisierten Prüfkörper wurde anschließend zusätzlich unter Schutzgas Hochtemperatur behandelt. Als Endtemperatur wurde in dem einen Fall 2000°C (Beispiel 1.3) sowie 2800 °C (Beispiel 1.4) gewählt. Mit zunehmender Temperatur wird dabei der amorphe Kokskohlenstoff in die Graphitstruktur überführt. Die Dichte der Prüfkörper blieb dabei annähernd konstant bei 1,1 g/cm³. Der geringfügige Dichteanstieg ist durch dem Schrumpf bei der Hochtemperaturbehandlung begründet. Dieser Schrumpf tritt immer dann auf, wenn die Endtemperatur der Hochtemperaturbehandlung signifikant über Kalzinierungstemperatur des Kokses liegt.

Nach der Herstellung der Prüfkörper wurden diese charakterisiert. Die Eigenschaften sind in Tabelle 1 zusammengestellt.

### Beispiel 2

Kalzinierter Acetylenkoks wurde im Anlieferungszustand ohne Mahlung einer Schutzsiebung mit einer Siebgröße von 0,4 mm unterworfen. Der gesiebte Acetylenkoks hatte anschließend eine Partikelgrößenverteilung von d10 = 117 µm, d50 = 190 µm und d99 = 360 µm und einem mittleren Formfaktor von 0,82. Das Kokspulver wurde im ersten Schritt mit 0,35 Gew.-% des flüssigen Aktivators gemäß Beispiel 1 versetzt und analog dem Beispiel 1 zu Bauteilen verarbeitet, wobei zur Ermittlung der Isotropie in der thermischen Ausdehnung für alle drei Raumrichtungen (x, y, z) Prüfkörper hergestellt wurden.

Die so hergestellten Bauteile hatten einen Harzanteil von 3,0 Gew.-%. Die Dichte der Prüfkörper lag bei 0,96 g/cm³ (Beispiel 2.1x, 2.1y, 2.1z) und damit deutlich höher als beim gemahlenen Steinkohlenteerpechkoks aus Beispiel 1. Ein Teil der Prüfkörper der X-Ausrichtung wurde anschließend mit einem Phenolharz imprägniert, wodurch sich eine Dichte von 1,2 g/cm³ ergibt (Beispiel 2.2). Im Anschluss wurden die harzimprägnierten Prüfkörper analog Beispiel 1 bei 900°C carbonisiert, wodurch sich eine Enddichte von 1,09 g/cm³ ergab. Alle Prüfkörper des Ausführungsbeispiels wurden charakterisiert. Die Ergebnisse sind in Tabelle 1 zusammengefasst.

### Beispiel 3

Gemahlenes synthetisches Feinkorngraphitpulver wurde einer Siebung unterworfen, wobei die Kornfraktion 0,1-0,2 mm entnommen wurde. Die Partikelgrößenanalyse der ausgewählten Siebfraktion ergab dabei folgendes Ergebnis: d10 = 120 µm, d50 = 170µm und d99 = 250µm. Das rieselfähige Graphitpulver wurde im ersten Schritt mit 1 Gew.-% des flüssigen Aktivators gemäß Beispiel 1 versetzt und mit erhöhter Harzeinbringung analog dem Beispiel 1 zu Prüfkörpern verarbeitet. Die Dichte der Prüfkörper beträgt nach der Aushärtung des Binders 1,0 g/cm³. Der Phenolharzanteil wurde dabei zu 10 Gew.-% bestimmt und die Prüfkörper wurden entsprechend den vorangehenden Beispielen charakterisiert (siehe Tabelle 1).

### Beispiel 4

Kalzinierter Flexikoks wurde im Anlieferungszustand ohne Mahlung einer Schutzsiebung mit einer Siebgröße von 0,4 mm unterworfen. Der gesiebte Flexikoks hatte anschließend eine Partikelgrößenverteilung von d10 = 85 µm, d50 = 120 µm und d99 = 220 µm. Das Kokspulver wurde im ersten Schritt mit 0,33 Gew.-% des flüssigen Aktivators gemäß Beispiel 1 versetzt und analog dem Beispiel 1 zu Bauteilen verarbeitet,
Die so hergestellten Bauteile hatten einen Harzanteil von 7 Gew.-%. Die Dichte der Prüfkörper lag bei 0,82g/cm3 Die Biegesteifigkeit ermittelt im Dreipunktbiegeversuch lag bei 0,7 GPa. Die Dreipunktbiegefestigkeit bei 3,8 MPa. Vergleicht man diese Eigenschaftswerte mit den Acetylenkoksproben (siehe Beispiel 2.1), so wird die Überlegenheit des Acetylenkoks basierenden Materials deutlich. Die Proben auf Basis von Acetylenkoks haben trotz niedrigeren Harzgehalt eine deutlich höhere Festigkeit und Steifigkeit. Ein niedriger Harzgehalt bei gleichzeitig hoher mechanischer Festigkeit mit Acetylenkoks als Rohstoff ist insbesondere vorteilhaft, da weniger flüchtige Gase bei der Nutzung des Formwerkzeuges entstehen und somit ein umweltfreundlichere Nutzung des Formwerkstoffes ermöglicht wird.

### Analyse

In der folgenden Tabelle sind einige physikalische Eigenschaften der hergestellten Prüfkörper wiedergegeben:

**Tabelle 1: Materialkennwerte der Ausführungsbeispiele (Mittelwerte)**

| Beispiel Nr. | 1.1 | 1.2 | 1.3 | 1.4 | 2.1 | 2.2 | 3 |
|---|---|---|---|---|---|---|---|
| AD (g/cm³) | 0,83 | 1,08 | 1,10 | 1,10 | 0,96 | 1,09 | 1,0 |
| ER (Ohmµm) | 5000 0 | 230 | 160 | 45 | 130000 | 1100 | 10000 |
| YM 3p (GPa) | 0,3 | 1,3 | 0,5 | 0,3 | 1,5 | 0,3 | 1,1 |
| FS 3p (MPa) | 0,4 | 2,4 | 1,6 | 1,3 | 5,7 | 1,7 | 4,0 |
| CTE RT/150°C (µm/(m^{∗}K)) | 4,4 | 3,6 | 3,2 | 2,8 | 5,6 (x-Richtung) 5,6 (y-Richtung) 5,5 (z-Richtung) | 4,7 | 5,1 |
| TC (W/(m^{∗}K)) | 0,5 | | 2,7 | 20 | | | 1,1 |

| | | | | | | | |
|---|---|---|---|---|---|---|---|
| AD (g/cm³): Dichte (geometrisch) in Anlehnung an ISO 12985-1 ER (Ohmµm): elektrischer Widerstand in Anlehnung an DIN 51911 YM 3p (GPa): E-Modul (Steifigkeit), bestimmt aus dem 3-Punkt-Biegeversuch FS 3p (MPa): 3-Punkt Biegefestigkeit in Anlehnung an DIN 51902 CTE RT/150°C (µm/(m^{∗}K)): Wärmeausdehnungskoeffizient gemessen zwischen Raumtemperatur und 150°C in Anlehnung an DIN 51909 TC (W/(m^{∗}K)): Wärmeleitfähigkeit in Anlehnung an DIN 51908 Beispiel 1.1: Steinkohlenteerpechkoks, Grünkörper mit 5 Gew.% Harzanteil Beispiel 1.2: Steinkohlenteerpechkoks, Grünkörper mit 5% Harzanteil zusätzlich Phenolharzimprägniert, bei 900°C carbonisiert Beispiel 1.3: Steinkohlenteerpechkoks, Grünkörper mit 5% Harzanteil zusätzlich Phenolharzimprägniert, bei 900°C carbonisiert und bei 2000°C hochtemperaturbehandelt Beispiel 1.4: Steinkohlenteerpechkoks, Grünkörper mit 5% Harzanteil zusätzlich Phenolharzimprägniert, bei 900°C carbonisiert und bei 2800°C graphitiert Beispiel 2.1: Acetylenkoks, Grünkörper mit 3 Gew.-% Bindeharzanteil Beispiel 2.2: Acetylenkoks, Grünkörper mit 3 Gew.-% Bindeharzanteil und anschließender Phenolharzimprägniert, bei 900°C carbonisiert Beispiel 3: Synthetischer Graphit mit 10% Binderanteil | | | | | | | |

Wie alle Beispiele zeigen, können mit dem erfindungsgemäßen Verfahren Materialdaten erhalten werden, die für Formgebungswerkzeug grundsätzlich geeignet sind und teilweise höhere Festigkeiten als vergleichbare etablierte Sandformwerkstoffe besitzen.

Weiterhin sind die Dichtewerte aller Prüfkörper vorteilhaft, da sie zu leichteren Formgebungswerkzeugen führen.

Die Prüfkörper, die einer anschließenden Temperaturbehandlung unterzogen wurden, zeigen eine vorteilhafte elektrische Leitfähigkeit, die die Möglichkeit einer Widerstandsbeheizung oder induktiven Beheizung eröffnet.

Die niedrigen Werte für den E-Modul sind besonders vorteilhaft, da dadurch die Thermoschockbeständigkeit des Formgebungswerkzeugs erhöht wird.

Die Festigkeiten der Prüfkörper sind durchweg hinreichend für die erfindungsgemäßen Anwendungen. Besonders hervorzuheben sind jedoch die hohen Festigkeiten bei erhöhten Bindergehalt und, insbesondere, bei Verwendung von Acetylenkoks, welche sogar die Festigkeiten von entsprechenden Formgebungswerkzeugen aus Sand übersteigen.

Weiterhin sind die Werte für den Wärmeausdehnungskoeffizienten auf einem niedrigen Niveau, welche durch weitere Temperaturbehandlungen (Carbonisierung und Graphitierung) weiterhin erniedrigt werden können und damit ein außergewöhnlich niedriges Niveau erreichen. Insbesondere ist festzustellen, dass das Material hochgradig isotrop bezüglich des Wärmeausdehnungskoeffizienten ist. Dies stellt die Formgenauigkeit, zum Beispiel beim Gießen, sicher und sorgt für ein konstantes Verhältnis der Abmessungen des Gusses.

Schließlich sind die Werte für die Wärmeleitfähigkeit im Vergleich zu Formgebungswerkzeugen aus Sand hoch. Höhere Wärmeleitfähigkeiten werden erzielt, wenn man Graphit und/oder hohe Bindergehalte wählt (siehe Beispiel 3). Die Wärmeleitfähigkeit lässt sich durch eine anschließende Temperaturbehandlung (Carbonisierung/Graphitierung) noch weiter erhöhen (siehe Beispiele 1.3 und 1.4).

## Patentansprüche

1. Formgebungswerkzeug für schmelzflüssiges Metall oder Glas, **dadurch gekennzeichnet, dass** das Formgebungswerkzeug Partikel enthält, wobei mindestens 50 Gew.-% der Partikel aus Kohlenstoffpartikeln bestehen, wobei die Partikel mit einem Binder miteinander verbunden sind,
wobei das Formgebungswerkzeug zu mindestens 90 Gew.-% aus den Partikeln besteht,
wobei das Formgebungswerkzeug eine geometrische Dichte von 0,7 g/cm³ bis 1,4 g/cm³ aufweist und
wobei das Formgebungswerkzeug einen Anisotropiefaktor hinsichtlich der thermischen Ausdehnung von weniger als 1,2 aufweist, was bedeutet, dass sich die thermischen Ausdehnungskoeffizienten in allen drei Raumrichtungen (x-, y- und z-Richtung) jeweils um nicht mehr als 20 % voneinander unterscheiden.

2. Formgebungswerkzeug nach Anspruch 1, **dadurch gekennzeichnet, dass** das Formgebungswerkzeug eine komplexe Geometrie umfassend Hinterschnitte oder Hohlräume aufweist und dabei von homogener Struktur ist.

3. Formgebungswerkzeug nach Anspruch 1, **dadurch gekennzeichnet, dass** die Kohlenstoffpartikel Acetylenkoks, Flexikoks, Fluidkoks, Shot Coke, Steinkohlenteerpechkoks, Rußkoks, synthetischen Graphit, Kugelgraphit, mikrokristallinen Naturgraphit, Anthrazite oder ein Granulat von Koks umfassen.

4. Formgebungswerkzeug nach Anspruch 1, **dadurch gekennzeichnet, dass** die Kohlenstoffpartikel Acetylenkoks umfassen.

5. Formgebungswerkzeug nach Anspruch 1, **dadurch gekennzeichnet, dass** die Partikel im Korngrößenbereich von d50 im Mittel einen Formfaktor (Breite/Länge) von mindestens 0,5 aufweisen.

6. Formgebungswerkzeug nach Anspruch 1, **dadurch gekennzeichnet, dass** das Formgebungswerkzeug einen Wärmeausdehnungskoeffizienten, gemessen zwischen Raumtemperatur und 150 °C, von weniger als 8 µm/(m·K) aufweist.

7. Formgebungswerkzeug nach Anspruch 1, **dadurch gekennzeichnet, dass** das Formgebungswerkzeug eine thermische Leitfähigkeit bei Raumtemperatur von mindestens 0,3 W/(m·K) aufweist.

8. Verfahren zur Herstellung eines Formgebungswerkzeugs für schmelzflüssiges Metall oder Glas nach mindestens einem der Ansprüche 1 bis 7 umfassend die folgenden Schritte:
a) Bereitstellen einer pulverförmigen Zusammensetzung, welche zu mindestens 50 Gew.-% aus Kohlenstoffpartikeln besteht,
b) Bereitstellen eines flüssigen Binders,
c) flächiges Ablegen einer Lage aus dem in a) bereitgestellten Material und lokales Ablegen von Tröpfchen des in b) bereitgestellten Materials auf diese Lage und beliebig häufiges Wiederholen dieses Schrittes c), wobei das lokale Ablegen der Tröpfchen in den jeweils nachfolgenden Wiederholungen dieses Schrittes c) entsprechend der gewünschten Form des herzustellenden Formgebungswerkzeugs angepasst wird,
d) Aushärten oder Trocknen des Binders und Erhalt des Formgebungswerkzeugs.

9. Verfahren nach Anspruch 8, **dadurch gekennzeichnet, dass** das Formgebungswerkzeug einer Temperaturbehandlung von mindestens 500 °C unterzogen wird.

10. Verfahren nach Anspruch 8, **dadurch gekennzeichnet, dass** das Formgebungswerkzeug einer Temperaturbehandlung von mindestens 2000 °C unterzogen wird.

11. Verfahren nach Anspruch 8, **dadurch gekennzeichnet, dass** das Formgebungswerkzeug ein- oder mehrmalig einer Nachverdichtung unterzogen wird, umfassend die folgenden Schritte:
- Imprägnieren mit einem Kohlenstofflieferanten und
- Carbonisieren bei einer Temperatur zwischen 500 °C und 1300 °C oder
- Nachverdichten mittels Gasphaseninfiltration (Chemical Vapor Infiltration (CVI)).

12. Verfahren nach Anspruch 8, **dadurch gekennzeichnet, dass** die Kohlenstoffpartikel der pulverförmigen Zusammensetzung Acetylenkoks, Flexikoks, Fluidkoks, Shot Coke, Steinkohlenteerpechkoks, Rußkoks, synthetischen Graphit, Kugelgraphit, mikrokristallinen Naturgraphit, Anthrazite oder ein Granulat von Koks umfassen,

13. Verfahren nach Anspruch 8, **dadurch gekennzeichnet, dass** die Kohlenstoffpartikel der pulverförmigen Zusammensetzung Acetylenkoks umfassen..

14. Verfahren nach Anspruch 8, **dadurch gekennzeichnet, dass** die Partikel der pulverförmigen Zusammensetzung im Korngrößenbereich von d50 im Mittel einen Formfaktor (Breite/Länge) von mindestens 0,5 aufweisen.

15. Formgebungswerkzeug erhältlich nach dem Verfahren gemäß einem der Ansprüche 8 bis 14.

## Claims

1. Shaping tool for molten metal or glass, **characterised in that** the shaping tool contains particles, wherein at least 50 wt.% of the particles consist of carbon particles, wherein the particles are interconnected by a binder, wherein the shaping tool consists of the particles by at least 90 wt.%, wherein the shaping tool has a geometric density of from 0.7 g/cm³ to 1.4 g/cm³ and wherein the shaping tool has an anisotropy factor with regard to thermal expansion of less than 1-2, which means that the thermal expansion coefficients in all three spatial directions (x-, y- and z-direction) differ from one other by no more than 20% in each case.

2. Shaping tool according to claim 1, **characterised in that** the shaping tool has a complex geometry comprising undercuts or cavities and is of homogeneous structure.

3. Shaping tool according to claim 1, **characterised in that** the carbon particles comprise acetylene coke, flexicoke, fluid coke, shot coke, hard coal tar pitch coke, carbon black coke, synthetic graphite, spheroidal graphite, microcrystalline natural graphite, anthracite or a coke granulate.

4. Shaping tool according to claim 1, **characterised in that** the carbon particles comprise acetylene coke.

5. Shaping tool according to claim 1, **characterised in that** the particles in the particle size range of d50 have, on average, a shape factor (width/length) of at least 0.5.

6. Shaping tool according to claim 1, **characterised in that** the shaping tool has a thermal expansion coefficient, measured between room temperature and 150°C, of less than 8 µm/(m·K).

7. Shaping tool according to claim 1, **characterised in that** the shaping tool has a thermal conductivity at room temperature of at least 0.3 W/(m·K).

8. Method for producing a shaping tool for molten metal or glass according to at least one of claims 1 to 7, comprising the following steps:
a) providing a powdered composition which consists of carbon particles by at least 50 wt.%,
b) providing a liquid binder,
c) applying, over a surface, a layer of the material provided in a) and locally applying droplets of the material provided in b) to said layer, and repeating step c) as often as desired, wherein the step of locally applying the droplets in the subsequent repetitions of said step c) is adjusted according to the desired shape of the shaping tool to be produced,
d) curing or drying the binder and obtaining the shaping tool.

9. Method according to claim 8, **characterised in that** the shaping tool is subjected to a temperature treatment of at least 500°C.

10. Method according to claim 8, **characterised in that** the shaping tool is subjected to a temperature treatment of at least 2000°C.

11. Method according to claim 8, **characterised in that** the shaping tool is subjected to a recompaction process on one or multiple occasions, which process comprises the following steps:
- impregnation with a carbon supplier and
- carbonisation at a temperature between 500°C and 1300°C or
- recompaction by means of gas phase infiltration (chemical vapour infiltration (CVI)).

12. Method according to claim 8, **characterised in that** the carbon particles of the powdered composition comprise acetylene coke, flexicoke, fluid coke, shot coke, hard coal tar pitch coke, carbon black coke, synthetic graphite, spheroidal graphite, microcrystalline natural graphite, anthracite or a coke granulate.

13. Method according to claim 8, **characterised in that** the carbon particles of the powdered composition comprise acetylene coke.

14. Method according to claim 8, **characterised in that** the particles of the powdered composition in the particle size range of d50 have, on average, a shape factor (width/length) of at least 0.5.

15. Shaping tool obtainable using the method according to any of claims 8 to 14.

## Revendications

1. Outil de formage pour métal en fusion ou verre, **caractérisé en ce que** l'outil de formage contient des particules, au moins 50 % en poids des particules étant constituées de particules de carbone,
les particules étant reliées entre elles par un liant,
l'outil de formage étant constitué des particules à au moins 90 % en poids,
l'outil de formage présentant une densité géométrique de 0,7 g/cm³ à 1,4 g/cm³ et
l'outil de formage présentant un facteur d'anisotropie inférieur à 1,2 en ce qui concerne la dilatation thermique, ce qui signifie que les coefficients de dilatation thermique ne diffèrent pas de plus de 20 % les uns des autres dans les trois directions spatiales (directions x, y et z).

2. Outil de formage selon la revendication 1, **caractérisé en ce que** l'outil de formage présente une géométrie complexe comprenant des contre-dépouilles ou des cavités et qu'il présente ainsi une structure homogène.

3. Outil de formage selon la revendication 1, **caractérisé en ce que** les particules de carbone comprennent du coke d'acétylène, du coke flexible, du coke fluide, du coke en grenaille, du coke de brai de goudron de houille, du coke de noir de carbone, du graphite synthétique, du graphite sphéroïdal, du graphite naturel microcristallin, de l'anthracite ou un granulé de coke.

4. Outil de formage selon la revendication 1, **caractérisé en ce que** les particules de carbone comprennent du coke d'acétylène.

5. Outil de formage selon la revendication 1, **caractérisé en ce que** les particules présentent, dans la plage granulométrique de d50, un facteur de forme moyen (largeur/longueur) d'au moins 0,5.

6. Outil de formage selon la revendication 1, **caractérisé en ce que** l'outil de formage présente un coefficient de dilatation thermique, mesuré entre la température ambiante et 150 °C, inférieur à 8 µm/{m•K).

7. Outil de formage selon la revendication 1, **caractérisé en ce que** l'outil de formage présente une conductivité thermique d'au moins 0,3 W/(m•K) à température ambiante.

8. Procédé de fabrication d'un outil de formage pour métal en fusion ou verre selon au moins l'une des revendications 1 à 7, comprenant les étapes suivantes :
a) mise à disposition d'une composition pulvérulente qui est constituée d'au moins 50 % en poids de particules de carbone,
b) mise à disposition d'un liant liquide,
c) dépôt à plat d'une couche du matériau mis à disposition à l'étape a) et dépôt local de gouttelettes du matériau mis à disposition à l'étape b) sur cette couche et répétition de l'étape c) aussi souvent que souhaité, le dépôt local des gouttelettes lors des répétitions ultérieures respectives de l'étape c) étant adapté en fonction de la forme désirée de l'outil de formage à fabriquer,
d) durcissement ou séchage du liant et obtention de l'outil de formage.

9. Procédé selon la revendication 8, **caractérisé en ce que** l'outil de formage est soumis à un traitement thermique d'au moins 500 °C.

10. Procédé selon la revendication 8, **caractérisé en ce que** l'outil de formage est soumis à un traitement thermique d'au moins 2 000 °C.

11. Procédé selon la revendication 8, **caractérisé en ce que** l'outil de formage est soumis une ou plusieurs fois à une recompression, comprenant les étapes suivantes :
- imprégnation avec un fournisseur de carbone et
- carbonisation à une température comprise entre 500 °C et 1 300 °C ou
- recompression par infiltration en phase vapeur (Chemical Vapor Infiltration (CVI)).

12. Procédé selon la revendication 8, **caractérisé en ce que** les particules de carbone de la composition pulvérulente comprennent du coke d'acétylène, du coke flexible, du coke fluide, du coke en grenaille, du coke de brai de goudron de houille, du coke de noir de carbone, du graphite synthétique, du graphite sphéroïdal, du graphite naturel microcristallin, de l'anthracite ou un granulé de coke.

13. Procédé selon la revendication 8, **caractérisé en ce que** les particules de carbone de la composition pulvérulente comprennent du coke d'acétylène.

14. Procédé selon la revendication 8, **caractérisé en ce que** les particules de la composition pulvérulente présentent, dans la plage granulométrique de d50, un facteur de forme moyen (largeur/longueur) d'au moins 0,5.

15. Outil de formage pouvant être obtenu par le procédé selon l'une des revendications 8 à 14.
